# EUROPEAN PATENT SPECIFICATION

(11) **EP 3 508 648 B1**
(45) Date of publication and mention of the grant of the patent: **30.12.2020**
(21) Application number: 19150707.8
(22) Date of filing: 08.01.2019
(51) Int. Cl.: D06F 39/14

(54) **LAUNDRY TREATMENT MACHINE**
WÄSCHEBEHANDLUNGSMASCHINE
MACHINE DE TRAITEMENT DU LINGE

(30) Priority: 08.01.2018 KR 20180002472
(43) Date of publication of application: 10.07.2019
(73) Proprietor: LG Electronics Inc., SEOUL, 07336 (KR)
(72) Inventor: AN, Junhee, 08592 Seoul (KR); KANG, Hyojeong, 08592 Seoul (KR); JANG, Hosung, 08592 Seoul (KR); JUNG, Minseung, 08592 Seoul (KR)
(74) Representative: Vossius & Partner Patentanwälte Rechtsanwälte mbB

(56) References cited:
- EP-A2- 2 644 765
- WO-A1-2015/055239
- DE-A1- 3 503 141
- US-A- 4 520 576

## Description

### BACKGROUND OF THE INVENTION

### 1. Field of the invention

The present invention relates to a laundry treatment machine, and more particularly, to a laundry treatment machine in which a microphone assembly for recognizing voice is mounted in a door.

### 2. Description of the Related Art

As the interactive smart home era begins in earnest, development of home appliances that provides an interactive service through a speech recognition-based artificial intelligence platform is required.

In order to provide such an interactive service, a home appliance having a microphone assembly for recognizing voice and a speaker for transmitting sound must be provided.

Even in a laundry treatment machine that performs cleaning through washing, rinsing, spin-dry, and the like so that contamination can be removed from clothes, bedding, and the like by using water, detergent, and mechanical action, the microphone assembly and the speaker may be installed to provide such an interactive service.

The microphone assembly and the speaker may be disposed in the front side near a user or in a door. In the case of a front load washing machine in which an input port is formed in the front side and a door for opening and closing the input port is disposed in the front side, a microphone assembly and a speaker may be disposed inside a door disposed in the front side.

However, in the case of a door having a forward convex shape, when a flat type microphone assembly is mounted in the inside, since a sound leakage space from which a sound is leaked is formed between the front surface of the door and the microphone assembly, there is a problem that the user's voice is not transmitted to the microphone.

In addition, when a sound generated from the speaker disposed inside the door is transmitted to the outside of the door, if the sound generated from the speaker is dispersed in various directions in the inside of the door, there is a problem that the sound cannot be transmitted accurately to the user.

DE 35 03 141 A1 discloses a laundry treatment device having a microphone assembly provided in the door of the device. It particularly discloses a laundry treatment device according to the preamble of claim 15.

### SUMMARY OF THE INVENTION

The present invention has been made in view of the above problems, and provides a laundry treatment machine capable of accurately recognizing a user's voice.

The present invention further provides a laundry treatment machine capable of accurately transmitting sound generated from a speaker to a user.

The present invention further provides a laundry treatment machine having a structure in which moisture is not introduced into a microphone assembly and a speaker that are electrically operated.

In accordance with an aspect of the present invention, a laundry treatment machine includes: a cabinet which forms an outer shape and has an input port through which laundry is input; a tub which is disposed inside the cabinet and stores washing water; a drum which is rotatably disposed inside the tub; a microphone assembly in which a plurality of microphones for speech recognition are spaced apart; a door which opens and closes the input port, and has an inner front surface, on which the microphone assembly is disposed, to which the microphone assembly is closely attached, that comprises a microphone hole, which communicates with the outside, formed in each portion where the plurality of microphones are disposed, so that it is possible to eliminate a space where the sound leakage occurs between the microphone assembly and the door.

The microphone hole of the laundry treatment machine according to the present invention is formed to be inclined downward forward, so that external water cannot easily flow into the door.

A depth H of the microphone hole of the laundry treatment machine according to the present invention is formed to be larger than three times a diameter D of the microphone hole, so that external water cannot easily flow into the inside of the door, and external sound can be properly transmitted to the inside.

The microphone assembly of the laundry treatment machine according to the present invention has a microphone which receives user's voice; and a printed circuit board which processes an audio signal received by the microphone into an electrical signal, wherein the printed circuit board has one side which is in close contact with an inner surface of the door, and has the other side on which the microphone is disposed.

The printed circuit board of the laundry treatment machine according to the present invention has a communication hole for communicating the microphone hole formed in the front side with the microphone disposed in the rear side, so that the voice of the user can be transmitted to the microphone.

The microphone assembly of the laundry treatment machine according to the present invention comprises an adhesive member which adheres the printed circuit board to the inner front surface of the door; and a water repellent member which prevents external moisture from flowing into the printed circuit board, so that the printed circuit board can be brought into close contact with the inner front surface of the door and external moisture can be prevented from entering.

The adhesive member of the laundry treatment machine according to the present invention is disposed on both sides of the water-repellent member, and the adhesive member has a hole, which has the same size as the communication hole, formed in a portion where the communication hole of the printed circuit board is formed, so that the voice of the user can be transmitted to the microphone.

The door of the laundry treatment machine according to the present invention comprises a door frame which forms an internal structure of the door; a front cover which is disposed on the front side of the door frame, is formed in a curved surface convex to the front side, and has a flat surface, on which the microphone assembly is mounted, that is formed inside; a door window which is disposed in a rear side of the front cover and seals the input port; and a rear cover which is disposed in a rear side of the door frame and covers the rear side of the door, wherein the front cover has a groove which forms a flat seating surface in a portion where the microphone assembly is mounted, so that the microphone assembly can be brought into close contact with the front cover.

The laundry treatment machine according to the present invention further comprises a speaker which outputs a sound corresponding to an operation state of the laundry treatment machine, processing information, or speech recognition result, wherein the rear cover has a speaker groove forming a groove convex to a rear side so as to form a space for collecting the sound generated from the speaker and a speaker hole formed in a lower side of the speaker groove so as to communicate with the outside, so that the sound generated by the speaker can be collected into the speaker groove and then transmitted to the outside through the speaker hole.

The laundry treatment machine according to the present invention further comprises a speaker mounting member which is disposed in the front side of the rear cover and on which the speaker is mounted, wherein the speaker is disposed in the speaker mounting member so as to face the rear cover, so that sound can be transmitted to the rear side of the door.

In the laundry treatment machine according to the present invention, a vertical rib and a horizontal rib, which are protruded to a rear side, are disposed in a lattice shape on a rear surface of the speaker mounting member in which the speaker is mounted, wherein the vertical rib and the horizontal rib are protruded to a rear side from a portion excluding a portion where the speaker is mounted, so that it is possible to reinforce the rigidity of the speaker mounting member and to identify a portion where the speaker is mounted.

The speaker mounting member of the laundry treatment machine according to the present invention has an erroneous assembling prevention rib protruded to a rear side of the speaker mounting member so as to be in contact with a lower side separated from an upper side of the speaker, so that it is possible to prevent the reverse mounting of the speaker.

The rear cover of the laundry treatment machine according to the present invention includes a protrusion rib protruding from an outer circumference of the speaker groove to the inside of the door and the protrusion rib comprises a first protrusion rib formed in an outer circumference of an upper side and left and right sides of the speaker groove; and a second protrusion rib formed in a lower side of the speaker groove, wherein the speaker is disposed to be inclined toward the second protrusion rib, and the second protrusion rib is longer than the first protrusion rib, so that the sound generated from the speaker can be collected into the speaker groove.

The laundry treatment machine according to the present invention further comprises a speaker water repellent member for preventing moisture from flowing into the inside of the speaker.

In accordance with another aspect of the present invention there is provided a laundry treatment machine as defined in claim 15.

### BRIEF DESCRIPTION OF THE DRAWINGS

The objects, features and advantages of the present invention will be more apparent from the following detailed description in conjunction with the accompanying drawings, in which:
FIG. 1 is a perspective view of a laundry treatment machine according to an embodiment of the present invention;
FIG. 2 is a perspective view of an opened door of a laundry treatment machine according to an embodiment of the present invention;
FIG. 3 is a rear perspective view of a door according to an embodiment of the present invention;
FIG. 4 is an exploded perspective view of a door according to an embodiment of the present invention;
FIG. 5 is a view showing the relationship between a microphone assembly and a front cover of door according to an embodiment of the present invention;
FIG. 6A and FIG. 6B are a top perspective view and a bottom perspective view of a microphone assembly according to an embodiment of the present invention;
FIG. 7A is a view showing a part of an adhesive member and a water-repellent member according to an embodiment of the present invention;
FIG. 7B is a cross-sectional view of an adhesive member and a water-repellent member according to an embodiment of the present invention;
FIG. 8 is a cross-sectional view illustrating a state in which a microphone assembly is mounted in a front cover according to an embodiment of the present invention;
FIG. 9A is a view showing a state before a microphone assembly is closely attached to a front cover according to an embodiment of the present invention;
FIG. 9B is a view illustrating a state in which a microphone assembly is closely attached to a front cover according to an embodiment of the present invention;
FIG. 10 is an exploded view for explaining a structure in which a speaker is disposed inside a door according to an embodiment of the present invention;
FIG. 11 is a front view of a speaker mounting member according to an embodiment of the present invention;
FIG. 12 is an enlarged perspective view of a portion where the speaker of FIG. 11 is mounted;
FIG. 13 is a bottom view of FIG. 11;
FIG. 14 is a view showing a state in which a speaker is mounted in FIG. 11;
FIG. 15 is a view for explaining a speaker groove part of a rear cover according to an embodiment of the present invention;
FIG. 16 is a perspective view showing an inner surface of a first rear cover according to an embodiment of the present invention;
FIG. 17A to FIG. 17C are a cross-sectional view and a cross-sectional perspective view of one side of a door in which a speaker is mounted according to an embodiment of the present invention;
FIG. 18 is a view for explaining a path through which a sound generated in a speaker is propagated to the rear of a first rear cover;
FIG. 19 is a view for explaining a speaker and a speaker water-repellent member according to an embodiment of the present invention;
FIG. 20 is a view illustrating a laundry treatment machine, a speech recognition system, and a home appliance control server of a laundry treatment machine control system according to an embodiment of the present invention; and
FIG. 21 is a schematic view of a laundry treatment machine control system according to an embodiment of the present invention.

### DETAILED DESCRIPTION OF THE PREFERRED EMBODIMENTS

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention.

The below expression indicating a direction, such as "front(F)/rear(R)/left(Le)/right(Ri)/up(U)/down(D)", is defined as shown in the drawing, but this is just for the purpose of clarifying the present invention, and it is obvious that the directions may be defined differently depending on where the reference is placed.

Hereinafter, the present invention will be described with reference to the drawings for explaining a laundry treatment machine according to embodiments of the present invention.

### <Configuration of laundry treatment machine>

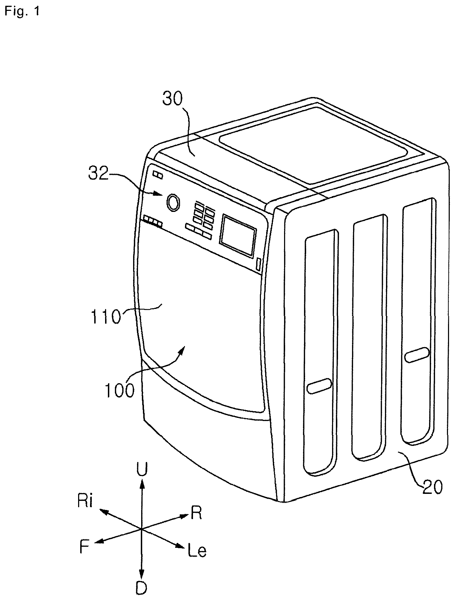

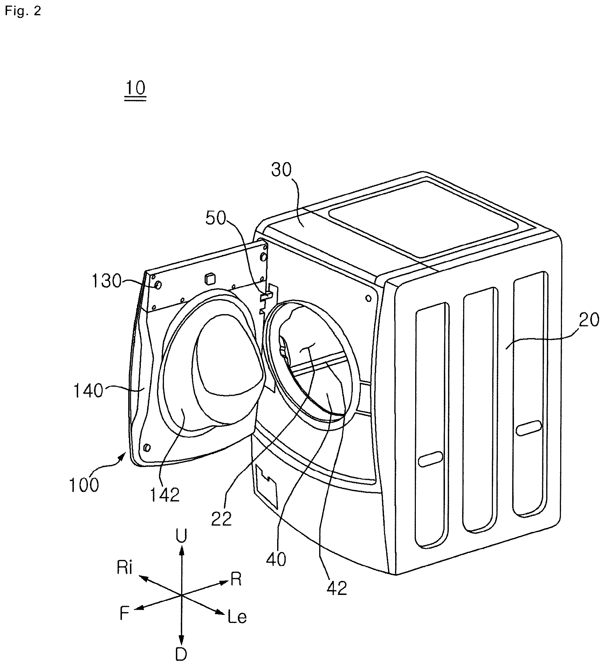

FIG. 1 is a perspective view of a laundry treatment machine according to an embodiment of the present invention. FIG. 2 is a perspective view of an opened door of a laundry treatment machine according to an embodiment of the present invention.

Referring to FIG. 1, a laundry treatment machine 10 according to an embodiment of the present invention includes a cabinet 20 which forms an outer shape and is provided with an input port, formed in the front F, through which laundry is input, a door 100 which opens and closes the input port through which the laundry is input into the cabinet 20, a tub (not shown) which is disposed inside the cabinet and receives washing water, a drum 40 which is rotatably disposed inside the tub, and a driving unit (not shown) which applies torque to the drum to rotate. The laundry treatment machine 10 according to the present embodiment may further include a detergent input unit 30 to which the detergent is input, and a control panel 32 which receives a user input and displays a laundry treatment machine state.

The cabinet 20 is provided with an input port 22 so that laundry can be taken in and out. The door 100 is rotatably connected to the cabinet 20 so that the input port 22 can be opened and closed. The door 100 according to the present embodiment is fixed to the cabinet 20 through a hinge part 50. The door 100 of the laundry treatment machine 10 according to the present embodiment may be provided with a control panel 32. The control panel 32 may be provided in the cabinet 20, unlike the present embodiment.

The tub forms a space for accommodating the washing water. The tub is disposed outside the drum 40 while surrounding the drum 40. A tub hole is formed on the front surface of the tub, and the tub hole is formed to communicate with the input port 22 of the cabinet 20 so that laundry can be input into the drum 40.

The driving unit may be disposed in the rear side (R) of the tub and generate a rotational force. The driving unit may be connected to a rotating shaft (not shown) and rotate the drum 40. The driving unit may rotate the drum 40 at various speeds or directions. The driving unit includes a stator (not shown) having a coil wound thereon and a rotor (not shown) rotated by generate an electromagnetic interaction with the coil.

The drum 40 receives the laundry and rotates. The drum 40 is disposed inside the tub. The drum 40 is formed into a rotatable cylindrical shape. The drum 40 is provided with a plurality of through holes to allow the washing water to pass through. The drum 40 receives the rotational force of the driving unit and rotates.

A drum hole is formed on the front side F of the drum 40. The drum hole is formed to communicate with the input port 22 and the tub hole so that the laundry can be taken in and out of the drum 40. A ball balancer (not shown) for reducing the vibration due to the rotation of the drum 40 may be coupled to the rim of the front side F and rear side R of the drum 40. The ball balancer may include a filling fluid therein along with a ball.

The laundry treatment machine according to the present embodiment may further include a gasket that seals a space between the tub and the cabinet 20. The gasket 24 may be disposed between an opening of the tub and the input port 22. The gasket relieves the impact transmitted to the door 100 when the drum 40 rotates and prevents the washing water in the tub from leaking to the outside.

The cabinet 20 may include a water supply module (not shown) for supplying washing water from an external water source into the tub, and a drain module (not shown) for discharging the washing water in the tub to the outside.

The control panel 32 may include an input unit (not shown) for inputting various operation commands such as selection of a washing course, operation time and reservation for each process through a user, and a display unit (not shown) for displaying the operation state of the laundry treatment machine 10. The control panel 32 according to the present embodiment is disposed in the door 100. That is, the input unit and the display unit may be formed in a front cover 110 of the door 100, and the control panel 32 for controlling the input unit and the display unit may be disposed in the rear side (R) of the front cover 110.

### <Configuration of door>

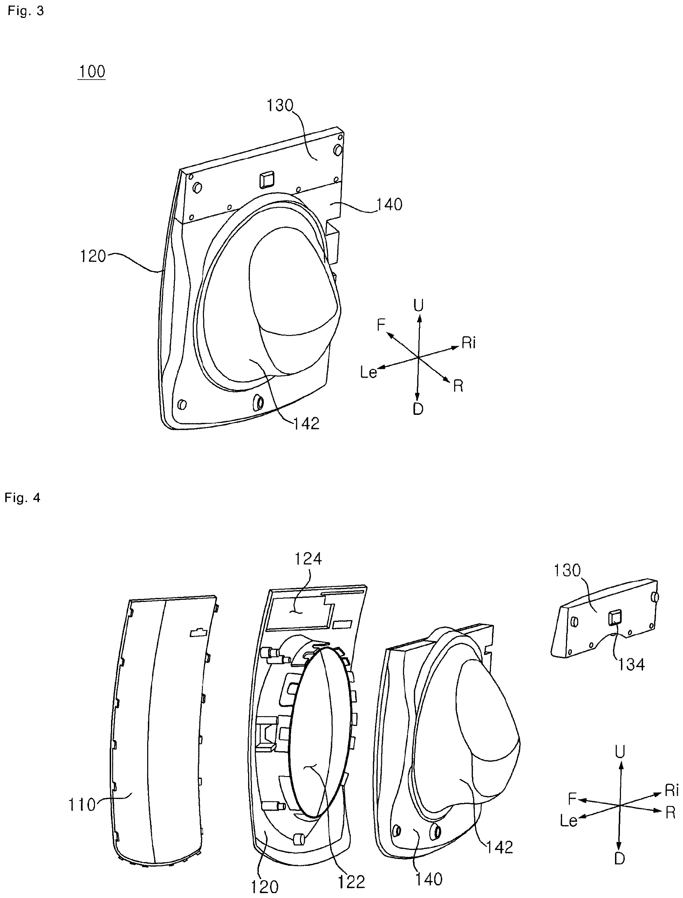

FIG. 3 is a rear perspective view of a door according to an embodiment of the present invention. FIG. 4 is an exploded perspective view of a door according to an embodiment of the present invention.

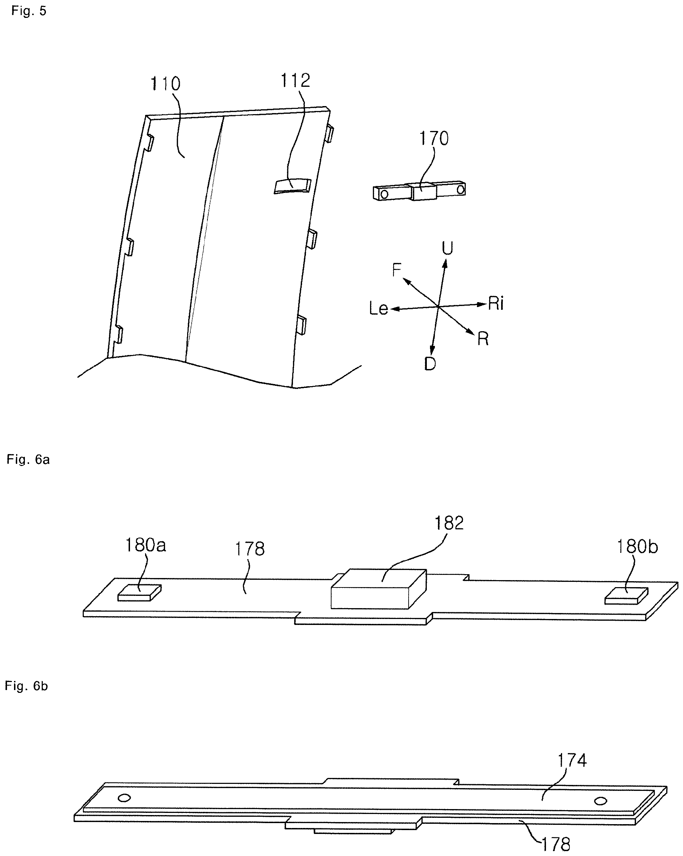

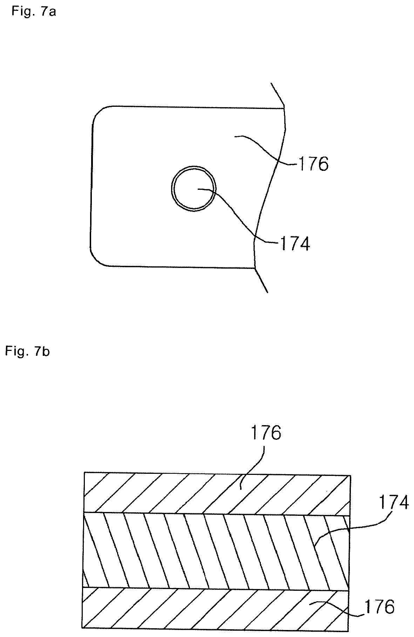

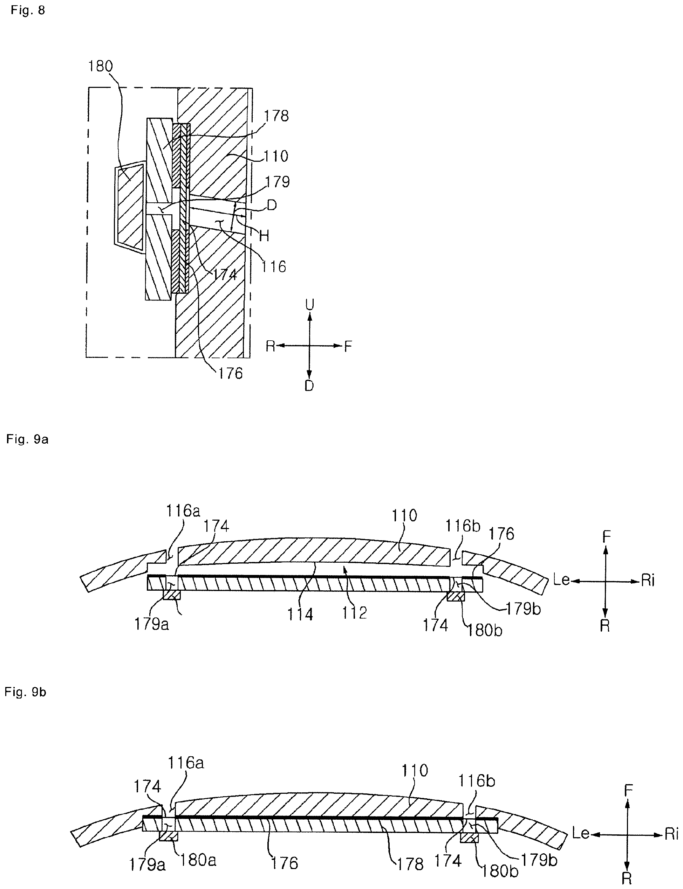

FIG. 5 is a view showing the relationship between a microphone assembly and a front cover of door according to an embodiment of the present invention. FIG. 6A and FIG. 6B are a view of a microphone assembly according to an embodiment of the present invention. FIG. 7A and FIG. 7B are a view showing an adhesive member and a water-repellent member according to an embodiment of the present invention. FIG. 8 is a cross-sectional view illustrating a state in which a microphone assembly is mounted in a front cover according to an embodiment of the present invention. FIG. 9A and FIG. 9B are a view for explaining a structure in which a microphone assembly is closely attached to a front cover according to an embodiment of the present invention.

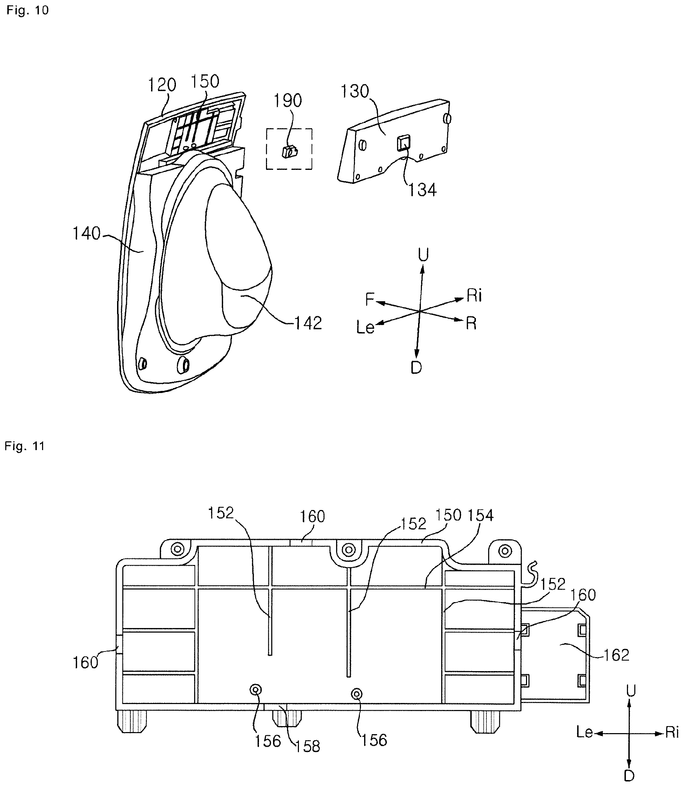

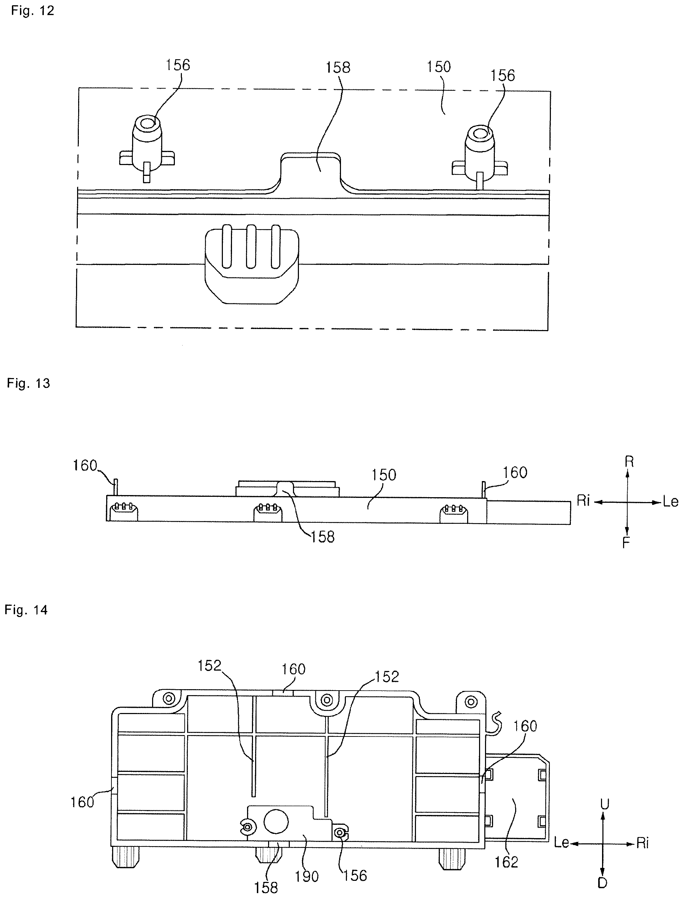

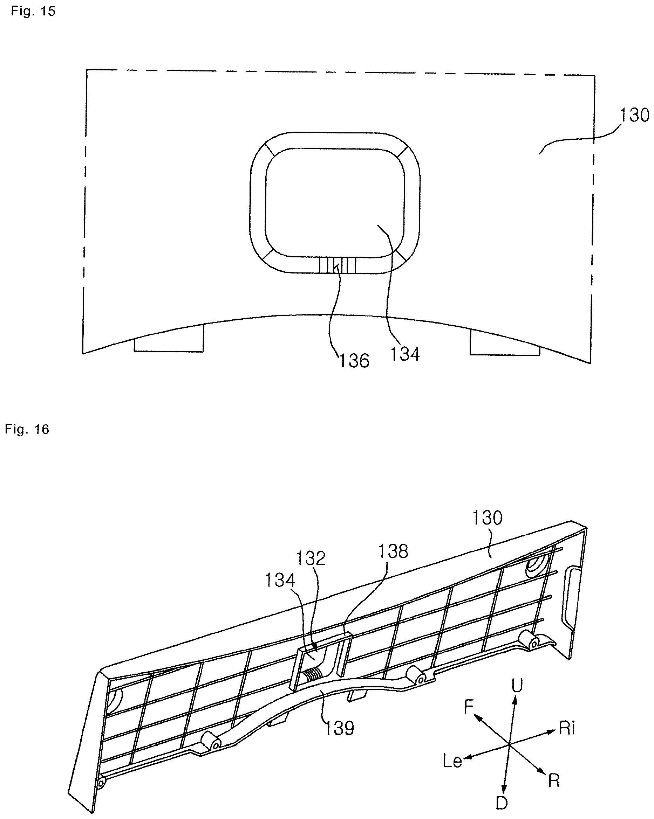

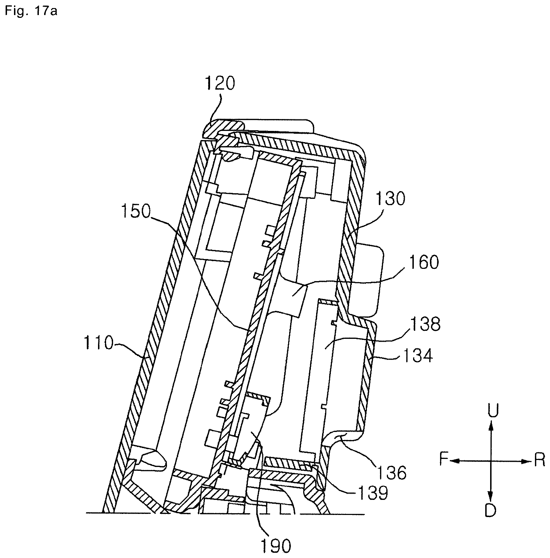

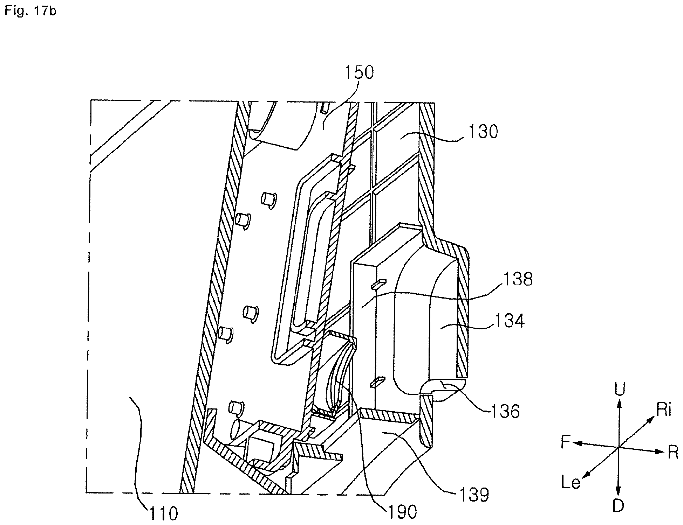

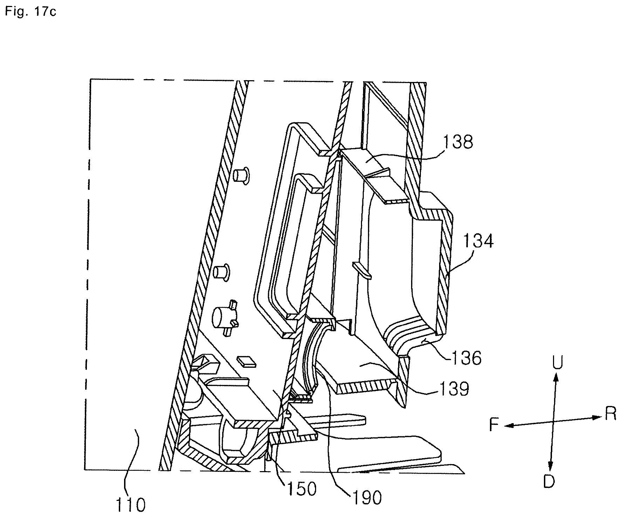

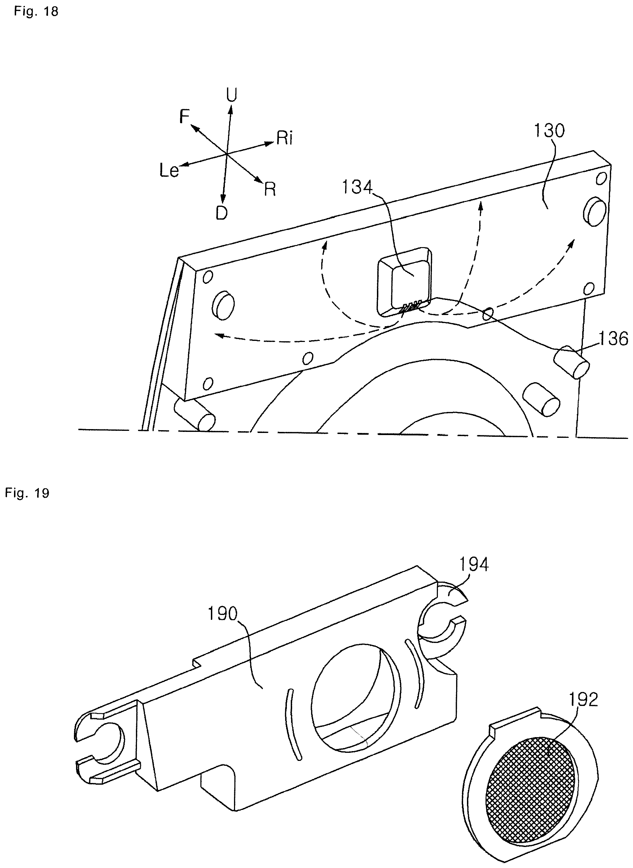

FIG. 10 is an exploded view for explaining a structure in which a speaker is disposed inside a door according to an embodiment of the present invention. FIG. 11 is a front view of a speaker mounting member according to an embodiment of the present invention. FIG. 12 is an enlarged perspective view of a portion where the speaker of FIG. 11 is mounted. FIG. 13 is a bottom view of FIG. 11. FIG. 14 is a view showing a state in which a speaker is mounted in FIG. 11. FIG. 15 is a view for explaining a speaker groove part of a rear cover according to an embodiment of the present invention. FIG. 16 is a perspective view showing an inner surface of a first rear cover according to an embodiment of the present invention. FIG. 17A to FIG. 17C are a cross-sectional view and a cross-sectional perspective view of one side of a door in which a speaker is mounted according to an embodiment of the present invention. FIG. 18 is a view for explaining a path through which a sound generated in a speaker is propagated to the rear of a first rear cover. FIG. 19 is a view for explaining a speaker and a speaker water-repellent member according to an embodiment of the present invention.

First, the configuration of the door 100 according to the present embodiment will be described.

The door 100 according to the present embodiment opens and closes the input port 22 formed in the cabinet 20. The door 100 according to the present embodiment is fixed to one side of the cabinet 20 through the hinge part 50.

The door according to the present embodiment includes a door frame 120 which forms the internal structure of the door, a front cover 110 which is disposed in the front side F of the door frame, a door window 142 which is formed of a transparent material so that a user can observe the inside of the drum 40 from the outside, and a rear cover 130 and 140 which is disposed in the rear side R of the door frame 120 and covers the rear side of the door.

The inside of the door according to the present embodiment includes a control panel 32 which controls the operation of the laundry treatment machine, a microphone assembly 170 (see FIG. 5) which receives the user's voice, a speech recognition transmission module (not shown) which transmits a voice received through the microphone assembly 170 to an external server, and a speaker 190 (see FIG. 10) which informs the user of the operation state or processing information of the laundry treatment machine, or outputs a voice corresponding to the result of speech recognition.

The front cover 110 according to the present embodiment forms an outer shape of the front side of the door 100. The front cover 110 according to the present embodiment may be formed in a curved surface convex to the front side F. The front cover 110 according to the present embodiment may be formed of a light-transmitting glass material or a synthetic resin material. Inside the front cover 110, a microphone assembly mounting part 112 on which a microphone assembly is mounted is formed. The front cover 110 is provided with a microphone hole 116a, 116b for communicating a microphone of the microphone assembly with the outside.

The microphone assembly mounting part 112 according to the present embodiment is formed in a left upper end of the front cover 110 when viewed from the front side. However, this is just one embodiment, and it may be formed in the center or the upper end of right side.

Referring to FIG. 9A and FIG. 9B, one side surface of the microphone assembly 170 is closely attached to the microphone assembly mounting part 112 of the present embodiment. The microphone assembly mounting part 112 forms a flat seating surface to which the microphone assembly 170 is closely attached to the inner surface of the front cover 110. The inner surface of the front cover 110 also forms a curved surface convex to the front side F. The microphone assembly mounting part 112 is provided with a groove having a flat seating surface 114 formed thereon so that the microphone assembly 170 can be closely attached to the microphone assembly mounting part 112. The inner surface of the front cover 110 excluding the microphone assembly mounting part 112 forms a curved surface.

The front cover 110 according to the present embodiment is provided with a microphone hole 116a, 116b formed in the front side F of a portion where the microphones 180a, 180b of the microphone assembly 170 is disposed. Two microphone holes 116a and 116b according to the present embodiment are formed to correspond to the two microphones 180a and 180b included in the microphone assembly 170.

The two microphone holes 116a and 116b according to the present embodiment are disposed to be spaced apart from each other by a distance between the two microphones 180a and 180b. The microphone holes 116a and 116b according to the present embodiment are formed to be inclined downward toward the front side F. The depth H of the microphone hole 116a, 116b according to the present embodiment is formed to be larger than the diameter D of the microphone hole 116a, 116b. In detail, the depth H of the microphone hole 116a, 116b is formed to be larger than three times the diameter D of the microphone hole 116a, 116b. The microphone hole 116a, 116b formed in the above-described structure can prevent moisture and the like from being introduced into the microphone hole 116a, 116b from the outside.

The door frame 120 according to the present embodiment is fastened to the front cover 110 at the front side F, and to the rear cover 130, 140 at the rear side R. The door frame 120 according to the present embodiment may be formed of a synthetic resin material. The door frame 120 according to the present embodiment has a window hole 122, formed in a lower side, in which the door window 142 is installed, and a panel hole 124, formed in an upper side, in which the control panel 32 is installed.

The rear cover 130 and 140 according to the present embodiment may be divided into a first rear cover 130 which is fastened to an upper portion of the door frame 120 and has a speaker hole 136 formed therein, and a second rear cover 140 which is fastened to a lower portion of the door frame 120 and fastens the door window 142 to the door frame 120.

The first rear cover 130 according to the present embodiment is disposed in the rear side R of a space where the control panel 32 disposed in the upper portion of the door frame 120 is disposed. The first rear cover 130 according to the present embodiment is disposed in the upper side U of the second rear cover 140.

Referring to FIG. 16, the first rear cover 130 according to the present embodiment has a speaker groove part 132, which is formed in a portion opposite to a portion where the speaker 190 of the door frame 120 is disposed, that collects sound generated from the speaker and sends the sound to the outside.

The speaker groove part 132 includes a speaker groove 134 which forms a groove into the rear side so as to form a space in which sound generated from the speaker 190 is collected, a speaker hole 136 which is formed to communicate with the outside so that the sound collected in the speaker groove 134 is transmitted to the outside, and a protrusion rib 138, 139 which protrudes from the outer circumference of the speaker groove 134 to the inside of the door 100 so that the sound generated from the speaker 190 is transmitted to the speaker groove 134.

In the speaker groove 134 according to the present embodiment, a substantially rectangular groove protrudes rearward R. The speaker groove 134 according to the present embodiment may be formed in a height substantially equal to or higher than the speaker 190. The speaker groove 134 according to the present embodiment may be formed to be larger than the speaker 190 so as to collect the sound generated from the speaker 190.

The speaker hole 136 according to the present embodiment is formed on the lower side D of the speaker groove 134. Therefore, the sound collected in the speaker groove 134 may escape to the outside of the door 100 through the speaker hole 136 formed in the lower side D.

The protrusion rib 138, 139 according to the present embodiment includes a first protrusion rib 138 which is formed in the upper side U and the left and right sides Le-Ri along the outer circumference of the speaker groove 134, and a second protrusion rib 139 which is formed in the lower side D of the speaker groove 134. The first protrusion rib 138 protrudes from the inner surface of the first rear cover 130 toward the front side F where the speaker 190 is disposed. Among the sound generated from the speaker 190, the first protrusion rib 138 may collect the sound dispersed to the upper side U and to the left and right sides Le-Ri into the speaker groove 134.

The second protrusion rib 139 according to the present embodiment protrudes from the lower side D of the speaker groove 134 toward the front side F where the speaker 190 is disposed. The second protrusion rib 139 according to the present embodiment may protrude forward more than the first protrusion ribs 138. The speaker 190 according to the present embodiment may be disposed to be inclined to the lower side of the rear side R, and the second protrusion rib 139 may be protruded to the front side F as closely as possible to the speaker 190 so as to minimize the possibility that the sound generated by the speaker 190 is leaked to an inner space of the door 100. The second protrusion rib 139 according to the present embodiment may be protruded forward F even to a range against the direction in which the speaker 190 is oriented.

The second rear cover 140 according to the present embodiment is disposed in the lower side D of the first rear cover 130. The second rear cover 140 according to the present embodiment is fastened to the door frame 120. A rim portion of the door window 142 may be disposed between the second rear cover 140 and the door frame 120 when the second rear cover 140 is fastened to the door frame 120.

The door window 142 according to the present embodiment is disposed in the window hole 122 of the door frame 120 and may seal the input port 22 to be formed on the front surface of the cabinet 20. The door window 142 according to the present embodiment may be formed of a light-transmitting glass material or a synthetic resin material.

### <Microphone assembly>

Hereinafter, the structure and arrangement of the microphone assembly according to the present embodiment will be described with reference to FIGS. 5 to 9.

The microphone assembly 170 according to the present embodiment includes a microphone 180a, 180b for receiving a voice of a user, a printed circuit board 178 for processing an audio signal received by the microphone 180a, 180b into an electrical signal, and an adhesive member 176 for attaching the printed circuit board 178 to the front surface of the front cover 110. The microphone assembly 170 according to the present embodiment may further include a connector 182 which is connected to the printed circuit board 178 and is connected to a connection line (not shown) connected to the speech recognition transmission module.

In order to remove a microphone noise, a two-core ground shielding line may be applied to the connection line according to the present embodiment.

The microphone assembly 170 may have a plurality of microphones 180a and 180b to receive a voice command of the user more accurately, and the plurality of microphones 180a and 180b may be disposed at different positions. The microphone assembly 170 according to the present embodiment includes two microphones 180a and 180b for securing speech recognition performance. The two microphones 180a and 180b are spaced apart from each other by a certain distance. The microphone assembly 170 according to the present embodiment may remove noise by comparing sounds input from the two microphones 180a and 180b. The two microphones 180a and 180b according to the present embodiment may be spaced apart from each other by 70 to 100 mm.

The microphone 180a, 180b according to the present embodiment is disposed on the rear surface of the printed circuit board 178. In the printed circuit board 178 according to the present embodiment, a communication hole 179a, 179b is formed in a portion where the microphone 180a, 180b is disposed. That is, in the printed circuit board 178 according to the present embodiment, two communication holes 179a and 179b are formed in a portion where two microphones 180a and 180b are disposed. The communication hole 179a, 179b formed in the printed circuit board 178 is formed in a position corresponding to the microphone hole 116a, 116b of the front cover 110. Therefore, external user's voice may be transmitted to the microphone 180a, 180b through the microphone hole 116a, 116b of the front cover 110 and the communication hole 179a, 179b of the printed circuit board 178.

An adhesive member 176 for adhering the printed circuit board 178 to the microphone assembly mounting part 112 of the front cover 110 is disposed on the front surface of the printed circuit board 178. The printed circuit board 178 according to the present embodiment is formed in a substantially rectangular plate shape and has a flat front surface.

The adhesive member 176 according to the present embodiment may adhere the microphone assembly 170 to the inner surface of the front cover 110. The microphone assembly 170 according to the present embodiment may further include a water repellent member 174 for preventing external water or moisture from entering the microphone 180a, 180b or the printed circuit board 178.

The water repellent member 174 according to the present embodiment may be disposed between the two adhesive members 176. The adhesive member 176 according to the present embodiment may be disposed in both sides of the water-repellent member 174. The adhesive member 176 may be provided with a hole, which has the same size as the communication hole 179a, 179b, that is formed in a portion where the communication hole 179a, 179b of the printed circuit board 178 is formed. However, in the water repellent member 174, a hole is not formed in a portion where the communication hole 179a, 179b of the printed circuit board 178 is formed.

The printed circuit board 178 according to the present embodiment may be adhered to the seating surface 114 of the microphone assembly mounting part 112 of the front cover 110 by the adhesive member 176.

### <Speaker Mounting Member and Speaker>

Hereinafter, a speaker and a speaker mounting member according to the present embodiment will be described with reference to FIGS. 10 to 19.

The door 100 according to the present embodiment may further include a speaker mounting member 150 on which the speaker 190 is mounted. The speaker mounting member 150 according to the present embodiment is formed in a plate shape and may be mounted in the door frame 120 or the first rear cover 130. The speaker mounting member 150 according to the present embodiment may be disposed in the panel hole 124 of the door frame 120. The speaker mounting member 150 according to the present embodiment is disposed in the front side F of the first rear cover 130.

A vertical rib 152 and a horizontal rib 154 may be arranged in a lattice form on the rear surface of the speaker mounting member 150 according to the present embodiment. A speaker mounting part 151, which is a portion on which the speaker 190 is mounted, is formed on the rear surface of the speaker mounting member 150 according to the present embodiment. The vertical rib 152 or the horizontal rib 154 according to the present embodiment is formed around the speaker mounting part 151. That is, the vertical rib 152 or the horizontal ribs 154 does not protrude toward the rear surface of the speaker mounting part 151, so that the speaker 190 can be stably placed on the rear surface of the speaker mounting member 150. In addition, the vertical rib 152 or the horizontal rib 154 does not protrude toward the rear surface of the speaker mounting part 151, so that the speaker 190 may be mounted on the rear surface of the speaker mounting member 150 as it is fitted to the end portion of the vertical rib 152 or the horizontal rib 154.

A speaker mounting boss 156 to which the speaker 190 is mounted may be formed in the speaker mounting member 150 according to the present embodiment. A fastening groove 194 of the speaker 190 may be fitted in the speaker mounting boss 156. The speaker mounting member 150 according to the present embodiment is provided with an erroneous assembling prevention rib 158, which prevents erroneous assembly of the speaker 190, formed on the lower side D where the speaker 190 is mounted. The erroneous assembling prevention rib 158 prevents the speaker 190 together with the speaker mounting boss 156 from being fastened in the reverse direction. In addition, the speaker mounting member 150 according to the present embodiment may further include a rib 160 for fixing the speaker mounting member 150 inside the door 100.

The speaker 190 according to the present embodiment is disposed inside the door 100 and is disposed to spread sound toward the rear side R. The speaker 190 according to the present embodiment is mounted in the speaker mounting member 150 disposed inside the door 100. The speaker 190 according to the present embodiment may be disposed to be inclined to the lower side D of the rear side R. The speaker 190 according to the present embodiment is disposed to face the second protrusion rib 139 of the first rear cover 130.

The speaker mounting member 150 according to the present embodiment may be provided with a speech recognition transmission module-mounting part 162 on which the speech recognition transmission module is mounted. The speech recognition transmission module-mounting part 162 may be formed in a portion adjacent to the microphone assembly 170 as the speech recognition transmission module-mounting part 162 is connected to the microphone assembly 170 by a connection line.

The speaker 190 according to the present embodiment may be provided with a fastening groove 194 formed to be fastened to the speaker mounting boss 156 of the speaker mounting member 150. The speaker 190 according to the present embodiment may further include a speaker water repellent member 174 for preventing water or moisture from flowing into a sound generating portion.

### <Use of laundry treatment machine>

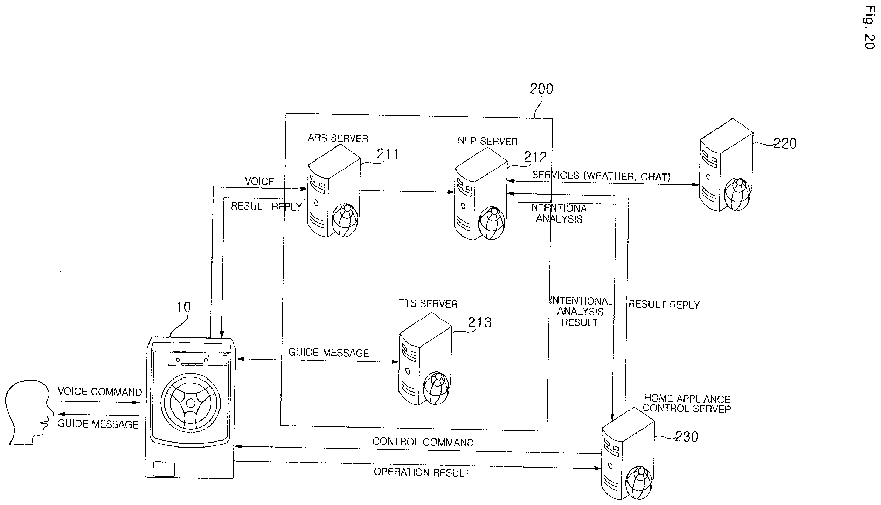

FIG. 20 is a view illustrating a laundry treatment machine, a speech recognition system, and a home appliance control server of a laundry treatment machine control system according to an embodiment of the present invention.

Hereinafter, referring to FIG. 20, a laundry treatment machine control system capable of accomplishing voice conversation with a user by using a laundry treatment machine including a microphone assembly, a speech recognition transmission module, and a speaker according to the present embodiment will be described.

As shown in FIG. 20, the laundry treatment machine control system may include a laundry treatment machine 10, a speech recognition system 200, a home appliance control server 230, and a service server 220 for providing required services.

The laundry treatment machine control system includes the speech recognition system 200 for receiving voice data from the laundry treatment machine 10, analyzing the voice data, and determining a voice command according to the analyzed voice data.

The speech recognition system 200 receives the voice data from the laundry treatment machine 10, converts the received voice data into text data, and analyzes the text data to determine a voice command. Further, the speech recognition system 200 may transmit a signal corresponding to the determined voice command to the home appliance control server 230 or the service server 220.

The home appliance control server 230 transmits a control signal based on a received request signal to the laundry treatment machine 10. The service server 220 determines a service corresponding to the request signal and transmits service data.

The speech recognition system 200 includes an automatic speech recognition (ASR) server 211, a natural language processing (NLP) server 212, a text to speech (TTS) server 213.

In addition, the speech recognition system 200 may further include a connection service server (not shown) for generating a request signal corresponding to a voice command and transmitting the request signal to the home appliance control server 230 or the service server 220.

The automatic speech recognition server 211, the natural language processing server 212, and the text-to-speech server 213 of the speech recognition system 200 may be implemented respectively by a single or a plurality of servers, as shown in the drawing. In addition, the automatic speech recognition server 211, the natural language processing server 212, and the text-to-speech server 213 of the speech recognition system 200 may form a single voice server.

The automatic speech recognition server 211 receives voice data from the laundry treatment machine 10 and converts the received voice data into text data.

The automatic speech recognition server 211 may perform speech recognition for the speech data received from the laundry treatment machine 10 to generate text data and transmit the generated text data to the natural language processing server 212.

The natural language processing server 212 receives the text data from the automatic speech recognition server 211, analyzes the received text data to determine a voice command, and transmits a response signal based on the determined voice command to the laundry treatment machine 10.

The natural language processing server 212 may analyze the text data received from the automatic speech recognition server 211 according to a natural language processing algorithm and determine a voice command.

The natural language processing server 212 may process a natural language that is routinely used by a person according to a natural language processing algorithm and may analyze the intent of a user. The natural language processing server 212 may perform natural language processing for the text data received from the automatic speech recognition server 211 and determine a voice command that matches the intent of a user.

The natural language processing server 212 may determine a voice command that matches the intent of a user even if the user inputs a voice command in a daily use language.

The natural language processing server 212 may transmit a signal corresponding to the natural language processing result, i.e., a signal corresponding to the determined voice command, to the home appliance control server 230 or the service server 220.

If the determined voice command is related to the laundry treatment machine 10, the natural language processing server 212 communicates with the home appliance control server 230 to perform a corresponding operation. If the voice command is not related to home appliances including the laundry treatment machine 10, the natural language processing server 212 communicates with an external service server 220 to perform a corresponding operation.

The natural language processing server 212 determines whether it is possible to support the voice command determined based on the state information of the laundry treatment machine 10, and may transmit a request signal corresponding to the determined voice command, or a signal indicating that it is an unsupported function to the home appliance control server 230.

The text-to-speech server 213 receives a signal including text corresponding to a response signal from the laundry treatment machine 10, converts the text included in the received signal into voice data, and transmits the voice data to the laundry treatment machine 10.

The laundry treatment machine 10 may receive voice command input by the user and transmit the voice data based on the received voice command input to the speech recognition system 200.

The home appliance control server 230 may transmit a control signal based on the received request signal to the laundry treatment machine 10.

For example, when a request to change a set temperature of the laundry treatment machine 10 is received, the home appliance control server 230 may transmit a control signal for changing the set temperature to the laundry treatment machine 10.

Meanwhile, the laundry treatment machine 10 may perform a corresponding operation according to the control signal received from the home appliance control server 230.

In addition, after performing the requested operation, the laundry treatment machine 10 may transmit a signal indicating that the operation is performed to the home appliance control server 230.

In addition, the home appliance control server 230 may receive a response signal for the control signal from the laundry treatment machine 10, and transmit processing result information corresponding to the response signal.

In addition, the home appliance control server 230 may transmit the operation result received from the laundry treatment machine 10 to the speech recognition system 200, and transmit a response signal including the processing result information to the laundry treatment machine 10.

The speech recognition system 200 receives a signal including an output text corresponding to the processing result information from the laundry treatment machine 10, converts the received output text into voice data, and transmits the voice data to the laundry treatment machine 10. The response signal based on the determined voice command that the natural language processing server 212 transmits to the laundry treatment machine 10 may include processing result information.

The laundry treatment machine 10 may receive a response signal based on the voice command determined by the natural language processing server 212. Here, the response signal may include text data of a response corresponding to the determined voice command.

For example, when a user inputs a voice command to change the set temperature of an air conditioner, the response signal may include text data indicating that the set temperature is changed.

Meanwhile, the laundry treatment machine 10 may transmit a signal including the text corresponding to the received response signal to the text-to-speech server 213. Here, the signal including the text corresponding to the response signal may include the output text corresponding to the processing result information.

Meanwhile, the text-to-speech server 213 converts the text included in the received signal into voice data and transmits the voice data to the laundry treatment machine 10. Here, the converted voice data may include a sound source file.

The laundry treatment machine 10 may output a voice guide message based on the received voice data through the speaker.

Meanwhile, the natural language processing server 212 may determine whether the laundry treatment machine 10 can support the voice command based on the state information of the laundry treatment machine 10 and, if it can support, may transmit a request signal corresponding to the determined voice command to the home appliance control server 230.

Further, when it is not possible to support the voice command determined based on the state information of the laundry treatment machine 10, the natural language processing server 212 may transmit a signal indicating that it is an unsupported function. A signal indicating that it is an unsupported function may be included in a response signal based on the determined voice command transmitted by the natural language processing server 212.

The laundry treatment machine 10 may request the voice data to the text-to-speech server 213, and output a voice guide message indicating that it is an unsupported function in the current state.

According to an embodiment, the home appliance control server 230 may determine whether voice command can be supported.

The laundry treatment machine control system of the present invention can be used by organically connecting servers having various roles for natural speech processing.

The laundry treatment machine 10 performs operations such as reception and preprocessing of the voice command, and transmission to server, and the speech recognition system 200 may perform a natural language processing such as voice/text conversion, intention analysis, and command identification.

As the speech recognition system 200 performs the natural language processing, the laundry treatment machine 10 may reduce the burden of the CPU, memory, etc. of the internal embedded module.

The laundry treatment machine 10 may receive voice data including a sound source file from the speech recognition system 200 and output a voice guide message as an audio so that it is possible to reply to the voice input of a user through auditory feedback.

The laundry treatment machine 10 may receive a voice file streaming from the speech recognition system 200, and reproduce and output the voice guide message to the user. Accordingly, the laundry treatment machine 10 need not store various sound source files.

The laundry treatment machine control system ensures compatibility and connectivity through a plurality of servers and utilizes the home appliance control server 230 as a final control command so that collision between home appliances control using WiFi communication and collision between the home appliance control through a portable terminal and the home appliance control by the voice input through the home appliance 300 can be prevented through the voice recognition process and the home appliance control server 230.

In addition, the laundry treatment machine control system can relieve a load concentrated on a specific server depending on a certain single server through an organic connection between the servers. In addition, since each server has a different role, when a problem occurs in a specific server, it is possible to respond easily by linking with other servers.

In addition, since a plurality of servers can be independently updated from time to time, it is advantageous for performance improvement.

### <Total Use of Home Appliances Including Laundry Treatment Machine>

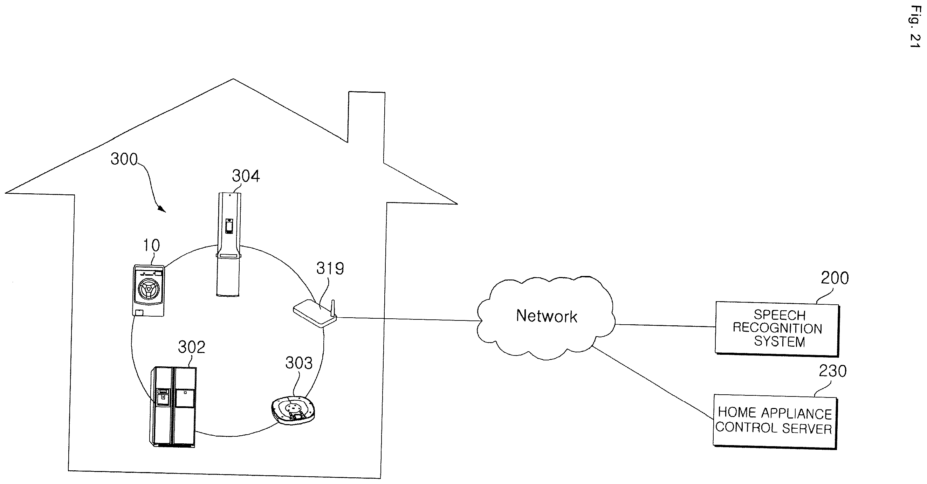

FIG. 21 is a schematic view of a laundry treatment machine control system according to an embodiment of the present invention.

Hereinafter, referring to FIG. 21, a control system that can be utilized in all home appliances that can be provided in the home including the laundry treatment machine 10 according to the present embodiment will be described.

Referring to FIG. 21, a laundry treatment machine control system according to an embodiment of the present invention includes a home appliance 300 which has a communication module and is capable of communicating with other device or accessing to network, a voice recognition system 200 for recognizing and processing voice, a home appliance control server 230 for controlling home appliances according to a voice recognition result.

The home appliance 300 includes a laundry treatment machine 10, an air conditioner 304, a mobile robot 303, and a refrigerator 302, and may include a TV (not shown), a cooking device (not shown), and the like.

In addition, the home appliance may include a portable terminal (not shown) such as a smart phone, a tablet PC.

The home appliance 300 may include a communication module, and the home appliances may be connected to each other to form a network. The appliance network may be connected to an external network, e.g., Internet through a communication device 219. In addition, the home appliance 300 may be connected to a network for separate speech recognition and home appliance control.

A communication device 210 may be an access point AP enabling to perform mutual data transmission and reception between home appliances and enabling each home appliance to communicate with the speech recognition system 200 and the home appliance control server 230.

The communication method of the home appliance 300 may be a Wi-Fi communication method. The Wi-Fi is just an example of a communication method, and the present invention is not limited to the communication method.

In addition, the home appliance 300 may include a different type of communication module or a plurality of communication modules. For example, a home appliance may include an NFC module, a Zigbee communication module, a Bluetooth™ communication module, and the like.

The home appliance 300 may be connected to a server included in the speech recognition system 200 or a certain external server, or to user's portable terminal or the like through a wi-fi communication module or the like, and may support a smart function such as remote monitoring, remote control. The user may check the information on the home appliance 300 or control the home appliance 300 through the portable terminal.

The home appliance 300 may receive the user's voice input, the speech recognition system 200 may recognize and analyze the user's voice input, and the home appliance control server 230 may control the home appliance 300.

Meanwhile, at least some of the servers included in the speech recognition system 200 may be a server operated by a manufacturer of a home appliance, a sales company, or may be a server operated by a company entrusted with a service by a manufacturer or a sales company.

According to the laundry treatment machine of the present invention, one or more of the following effects can be obtained.

First, the laundry treatment machine according to the present invention is advantageous in that a microphone for recognizing a voice of a user is closely attached to an inner surface of a door, and the voice of user is recognized by a plurality of microphone, thereby more accurately recognizing the voice of a user.

Second, the laundry treatment machine according to the present invention is advantageous in that a sound generated from a speaker is collected into a speaker groove and then transmitted to the outside through a speaker hole, thereby transmitting a clear sound to a user.

Third, the laundry treatment machine according to the present invention is advantageous in that a water repellent member is mounted in a speaker or a microphone assembly disposed inside a door, the microphone hole is inclined downwardly toward the front side, the speaker hole is formed toward the rear side of the door, so that it is possible to prevent external moisture or water from entering and it can be used for a long period of time.

## Claims

1. A laundry treatment machine comprising:
a cabinet (20) that defines an exterior of the laundry treatment machine, the cabinet (20) having an input port (22) through which laundry is input;
a tub disposed inside the cabinet (20) and defines a space configured to store washing water;
a drum (40) rotatably disposed inside the tub;
a door (100) configured to open and close the input port (22), **characterised in that** the laundry treatment machine further comprises
a microphone assembly (170) including a plurality of microphones (180a, 180b) for speech recognition, the microphones being spaced apart from each other;
and **in that** the door (100) includes an inner front surface on which the microphone assembly (170) is disposed,
and wherein a plurality of microphone holes (116a, 116b) is formed in the inner front surface of the door (100), wherein each of the plurality of microphone holes (116a, 116b) is formed so as to communicate with a respective one of the plurality of microphones (180a, 180b) and the outside of the door (100).

2. The laundry treatment machine of claim 1, wherein each microphone hole (116a, 116b) is formed to be inclined downward forward.

3. The laundry treatment machine of claim 1, or 2, wherein a depth (H) of each microphone hole (116a, 116b) is formed to be larger than three times a diameter (D) of the microphone hole (116a, 116b).

4. The laundry treatment machine of claim 1, 2, or 3, wherein the microphone assembly (170) further comprises:
a printed circuit board (178) for processing an audio signal received by the microphone assembly (170) into an electrical signal,
wherein the printed circuit board (178) is in close contact with the inner front surface of the door (100) at one side, and wherein the microphones are disposed on the other side of the printed circuit board (178).

5. The laundry treatment machine of claim 4, wherein the printed circuit board (178) has a communication hole (179a, 179b) for communicating the microphone hole (116a, 116b) formed in the front side with the microphone (180a, 180b) disposed in the rear side.

6. The laundry treatment machine of claim 4, or 5, wherein the microphone assembly (170) comprises:
an adhesive member (176) for adhering the printed circuit board (178) to the inner front surface of the door (100); and
a water repellent member (174) for preventing external moisture from flowing into the printed circuit board (178), wherein the adhesive member (176) is disposed on both sides of the water-repellent member (174),
and the adhesive member (176) has a hole formed in a portion where the communication hole (179a, 179b) of the printed circuit board (178) is formed, wherein the hole has the same size as the communication hole (179a, 179b).

7. The laundry treatment machine of any one of claims 1 to 6, wherein the door (100) comprises:
a door frame (120) that defines an internal structure of the door;
a front cover (110) disposed on the front side (F) of the door frame (120), the front cover (110) being formed in a curved surface convex to the front side, and having a flat surface on which the microphone assembly (170) is mounted;
a door window (142) disposed in a rear side of the front cover (110) and sealing the input port (22); and
a rear cover (130) disposed in a rear side (R) of the door frame (120) and covering the rear side of the door (100),
wherein the front cover (110) has a groove which forms a flat seating surface in a portion where the microphone assembly (170) is mounted.

8. The laundry treatment machine of claim 7, further comprising a speaker (190) disposed between the front cover (110) and the rear cover (130) for outputting sound,
wherein the rear cover (130) has a speaker groove (134) forming a groove convex to a rear side so as to form a space for collecting the sound generated from the speaker (190) and a speaker hole (136) formed in a lower side of the speaker groove (134) so as to communicate with the outside.

9. The laundry treatment machine of claim 8, further comprising a speaker mounting member (150) disposed in the front side of the rear cover (130) and on which the speaker (190) is mounted,
wherein the speaker (190) is disposed in the speaker mounting member (150) so as to face the rear cover (130).

10. The laundry treatment machine of claim 9, further comprising a vertical rib (152) and a horizontal rib (154) being protruded to a rear side from a rear surface of the speaker mounting member (150),
wherein the vertical rib (152) and the horizontal rib (154) are disposed in a lattice shape on a rear surface of the speaker mounting member (150),
wherein the vertical rib (152) and the horizontal rib (154) are protruded to a rear side from a portion excluding a portion where the speaker (190) is mounted.

11. The laundry treatment machine of claim 10, further comprising an erroneous assembling prevention rib (158) protruding rear side of the speaker mounting member (150) in contact with a lower side of the speaker (190), wherein the lower side of the speaker (190) separated from an upper side of the speaker (190).

12. The laundry treatment machine of claim 9, wherein the rear cover (130) includes a protrusion rib (138, 139) protruding from an outer circumference of the speaker groove (134) to the inside of the door (100).

13. The laundry treatment machine of claim 12, wherein the protrusion rib (138, 139) comprises:
a first protrusion rib (138) formed in an outer circumference of an upper side and left and right sides of the speaker groove (134); and
a second protrusion rib (139) formed in a lower side of the speaker groove (134),
wherein the speaker (190) is disposed to be inclined toward the second protrusion rib (139), and the second protrusion rib (139) is longer than the first protrusion rib (138).

14. The laundry treatment machine of any one of claims 8 to 13, further comprising a speaker water repellent member for preventing moisture from flowing into the inside of the speaker (190).

15. A laundry treatment machine comprising:
a cabinet (20) that defines an exterior of the laundry treatment machine, the cabinet (20) having an input port (22) through which laundry is input;
a tub disposed inside the cabinet (20) and defines a space configured to store washing water;
a drum (40) rotatably disposed inside the tub;
a speaker (190) for outputting a sound corresponding to an operation state of the laundry treatment machine, processing information, or speech recognition result; and
a door (100) configured to open and close the input port (22), and forming a space in which the speaker (190) is disposed,
**characterised in that**
a speaker groove part (132) is formed on an inner rear surface of the door (100) so as to collect sound generated from the speaker (190) and transmit the sound to the outside,
wherein the door (100) comprises:
a door frame (120); and
a front cover (110) disposed on the front side (F) of the door frame; and
a rear cover (130) disposed in a rear side (R) of the door frame (120) and covering the rear side of the door (100),
wherein the rear cover (130) has a speaker groove (134) forming a groove convex to a rear side so as to form a space for collecting the sound generated from the speaker (190) and a speaker hole (136) formed in a lower side of the speaker groove (134) so as to communicate with the outside.

## Patentansprüche

1. Wäschebehandlungsmaschine, die aufweist:
ein Gehäuse (20), das ein Äußeres der Wäschebehandlungsmaschine definiert, wobei das Gehäuse (20) eine Einfüllöffnung (22) hat, durch welche Wäsche eingefüllt wird;
eine Wanne, die im Inneren des Gehäuses (20) angeordnet ist und einen Raum definiert, der konfiguriert ist, um Waschwasser zu lagern;
eine Trommel (40), die drehbar im Inneren der Wanne angeordnet ist;
eine Tür (100), die konfiguriert ist, um die Einfüllöffnung (22) zu öffnen und zu schließen, **dadurch gekennzeichnet, dass** die Wäschebehandlungsmaschine ferner aufweist:
eine Mikrofonanordnung (170), die mehrere Mikrofone (180a, 180b) für die Spracherkennung umfasst, wobei die Mikrofone voneinander beabstandet sind;
und dass die Tür (100) eine innere vordere Oberfläche umfasst, auf welcher die Mikrofonanordnung (170) angeordnet ist,
und wobei mehrere Mikrofonlöcher (116a, 116b) in der inneren vorderen Oberfläche der Tür (100) ausgebildet sind, wobei jedes der mehreren Mikrofonlöcher (116a, 116b) derart ausgebildet ist, dass es mit einem jeweiligen der mehreren Mikrofone (180a, 180b) und dem Äußeren der Tür (100) in Verbindung steht.

2. Wäschebehandlungsmaschine nach Anspruch 1, wobei jedes Mikrofonloch (116a, 116b) derart ausgebildet ist, dass es nach von geneigt ist.

3. Wäschebehandlungsmaschine nach Anspruch 1 oder 2, wobei eine Tiefe (H) jedes Mikrofonlochs (116a, 116b) derart ausgebildet ist, dass sie größer als das 3-Fache eines Durchmessers (D) des Mikrofonlochs (116a, 116b) ist.

4. Wäschebehandlungsmaschine nach Anspruch 1, 2 oder 3, wobei die Mikrofonanordnung (170) ferner aufweist:
eine Leiterplatte (178) zur Verarbeitung eines von der Mikrofonanordnung (170) empfangenen Audiosignals in ein elektrisches Signal,
wobei die Leiterplatte (178) auf einer Seite in engem Kontakt mit der inneren vorderen Oberfläche der Tür (100) ist, und wobei die Mikrofone auf der anderen Seite der Leiterplatte (178) angeordnet sind.

5. Wäschebehandlungsmaschine nach Anspruch 4, wobei die Leiterplatte (178) ein Verbindungsloch (179a, 179b) zur Verbindung des in der Vorderseite ausgebildeten Mikrofonlochs (116a, 116b) mit dem Mikrofon (180a, 180b), das in der Rückseite angeordnet ist, hat.

6. Wäschebehandlungsmaschine nach Anspruch 4 oder 5, wobei die Mikrofonanordnung (170) aufweist:
ein Klebstoffelement (176) zum Kleben der Leiterplatte (178) an die innere vordere Oberfläche der Tür (100); und
ein wasserabweisendes Element (174), um zu verhindern, das äußere Feuchtigkeit in die Leiterplatte (178) fließt, wobei das Klebstoffelement (176) auf beiden Seiten des wasserabweisenden Elements (174) angeordnet ist,
und wobei das Klebstoffelement (176) ein Loch hat, das in einem Abschnitt ausgebildet ist, wo das Verbindungsloch (179a, 179b) der Leiterplatte (178) ausgebildet ist, wobei das Loch die gleiche Größe wie das Verbindungsloch (179a, 179b) hat.

7. Wäschebehandlungsmaschine nach einem der Ansprüche 1 bis 6, wobei die Tür (100) aufweist:
einen Türrahmen (120), der eine innere Struktur der Tür definiert;
eine vordere Abdeckung (110), die auf der Vorderseite (F) des Türrahmens (120) angeordnet ist, wobei die vordere Abdeckung (110) in einer gekrümmten Oberfläche ausgebildet ist, die zu der Vorderseite konvex ist, und eine flache Oberfläche hat, auf der die Mikrofonanordnung (170) montiert ist;
ein Türfenster (142), das in einer Rückseite der vorderen Abdeckung (110) angeordnet ist und die Einfüllöffnung (22) abdichtet; und
eine hintere Abdeckung (130), die in einer Rückseite (R) des Türrahmens (120) angeordnet ist und die Rückseite der Tür (100) bedeckt,
wobei die vordere Abdeckung (110) eine Nut hat, die in einem Abschnitt, in dem die Mikrofonanordnung (170) montiert ist, eine flache Auflageroberfläche bildet.

8. Wäschebehandlungsmaschine nach Anspruch 7, die ferner einen Lautsprecher (190) aufweist, der zwischen der vorderen Abdeckung (110) und der hinteren Abdeckung (130) angeordnet ist, um Schall auszugeben,
wobei die hintere Abdeckung (130) eine Lautsprechernut (134), die eine Nut bildet, die zu einer Rückseite konvex ist, um einen Raum zum Sammeln des von dem Lautsprecher (190) erzeugten Schalls zu bilden, und ein Lautsprecherloch (136) hat, das in einer Unterseite der Lautsprechernut (134) ausgebildet ist, um mit dem Äußeren in Verbindung zu stehen.

9. Wäschebehandlungsmaschine nach Anspruch 8, die ferner ein Lautsprechermontageelement (150) aufweist, das in der Vorderseite der hinteren Abdeckung (130) angeordnet ist, auf dem der Lautsprecher (190) montiert ist,
wobei der Lautsprecher (190) derart in dem Lautsprechermontageelement (150) angeordnet ist, dass er der hinteren Abdeckung (130) zugewandt ist.

10. Wäschebehandlungsmaschine nach Anspruch 9, die ferner eine vertikale Rippe (152) und eine horizontale Rippe (154) aufweist, die von einer hinteren Oberfläche des Lautsprechermontageelements (150) zu einer Rückseite vorstehen,
wobei die vertikale Rippe (152) und die horizontale Rippe (154) in einer Gitterform auf einer hinteren Oberfläche des Lautsprechermontageelements (150) angeordnet sind,
wobei die vertikale Rippe (152) und die horizontale Rippe (154) von einem abschnitt ohne einen Abschnitt, wo der Lautsprecher (190) montiert ist, zu einer Rückseite vorstehen.

11. Wäschebehandlungsmaschine nach Anspruch 10, die ferner eine Rippe (158) zur Verhinderung einer fehlerhaften Montage aufweist, die in Kontakt mit einer Unterseite des Lautsprechers (190) von der Rückseite des Lautsprechermontageelements (150) vorsteht, wobei die Unterseite des Lautsprechers (190) von einer Oberseite des Lautsprechers (190) getrennt ist.

12. Wäschebehandlungsmaschine nach Anspruch 9, wobei die hintere Abdeckung (130) eine Vorsprungrippe (138, 139) umfasst, die von einem Außenumfang der Lautsprechernut (134) ins Innere der Tür (100) vorsteht.

13. Wäschebehandlungsmaschine nach Anspruch 12, wobei die Vorsprungrippe (138, 139) aufweist:
eine erste Vorsprungrippe (138), die in einem Außenumfang einer Oberseite und linker und rechter Seiten der Lautsprechernut (134) ausgebildet ist; und
eine zweite Vorsprungrippe (139), die in einer Unterseite der Lautsprechernut (134) ausgebildet ist,
wobei der Lautsprecher (190) derart angeordnet ist, dass er in Richtung der zweiten Vorsprungrippe (139) geneigt ist, und die zweite Vorsprungrippe (139) länger als die erste Vorsprungrippe (138) ist.

14. Wäschebehandlungsmaschine nach einem der Ansprüche 8 bis 13, die ferner ein wasserabweisendes Lautsprecherelement aufweist, um zu verhindern, dass Feuchtigkeit in das Innere des Lautsprechers (190) fließt.

15. Wäschebehandlungsmaschine, die aufweist:
ein Gehäuse (20), das ein Äußeres der Wäschebehandlungsmaschine definiert, wobei das Gehäuse (20) eine Einfüllöffnung (22) hat, durch welche Wäsche eingefüllt wird;
eine Wanne, die im Inneren des Gehäuses (20) angeordnet ist und einen Raum definiert, der konfiguriert ist, um Waschwasser zu lagern;
eine Trommel (40), die drehbar im Inneren der Wanne angeordnet ist;
einen Lautsprecher (190) zum Ausgeben von Schall, der einem Betriebszustand der Wäschebehandlungsmaschine, Verarbeitungsinformationen oder einem Spracherkennungsergebnis entspricht; und
eine Tür (100), die konfiguriert ist, um die Einfüllöffnung (22) zu öffnen und zu schließen, und die einen Raum bildet, in dem der Lautsprecher (190) angeordnet ist, **dadurch gekennzeichnet, dass**
ein Lautsprechernutteil (132) auf einer inneren hinteren Oberfläche der Tür (100) ausgebildet ist, um von dem Lautsprecher (190) erzeugten Schall zu sammeln und den Schall nach außen auszugeben,
wobei die Tür (100) aufweist:
einen Türrahmen (120); und
eine vordere Abdeckung (110), die auf der Vorderseite (F) des Türrahmens angeordnet ist; und
eine hintere Abdeckung (130), die in einer Rückseite (R) des Türrahmens (120) angeordnet ist und die Rückseite der Tür (100) bedeckt,
wobei die hintere Abdeckung (130) eine Lautsprechernut (134), die eine Nut bildet, die zu einer Rückseite konvex ist, um einen Raum zum Sammeln des von dem Lautsprecher (190) erzeugten Schalls auszubilden, und ein Lautsprecherloch (136) hat, das in einer Unterseite der Lautsprechernut (134) ausgebildet ist, um mit dem Äußeren in Verbindung zu stehen.

## Revendications

1. Machine de traitement du linge comprenant :
une carrosserie (20) qui définit un extérieur de la machine de traitement du linge, la carrosserie (20) ayant un orifice d'introduction (22) à travers lequel le linge est introduit ;
une cuve disposée à l'intérieur de la carrosserie (20) et qui définit un espace configuré pour stocker l'eau de lavage ;
un tambour (40) disposé de manière rotative à l'intérieur de la cuve ;
une porte (100) configurée pour ouvrir et fermer l'orifice d'introduction (22), **caractérisé en ce que** la machine de traitement du linge comprend en outre
un ensemble de microphones (170) comportant une pluralité de microphones (180a, 180b) pour la reconnaissance vocale, les microphones étant espacés les uns des autres ;
et **en ce que** la porte (100) comporte une surface avant interne sur laquelle l'ensemble de microphones (170) est disposé,
et dans laquelle une pluralité de trous de microphone (116a, 116b) est formée dans la surface avant interne de la porte (100), dans laquelle chacun de la pluralité de trous de microphone (116a, 116b) est formé de manière à communiquer avec un microphone respectif de la pluralité de microphones (180a, 180b) et l'extérieur de la porte (100).

2. Machine de traitement du linge selon la revendication 1, dans laquelle chaque trou de microphone (116a, 116b) est formé pour être incliné vers le bas vers l'avant.

3. Machine de traitement du linge selon la revendication 1, ou 2, dans laquelle une profondeur (H) de chaque trou de microphone (116a, 116b) est formée pour être plus large que trois fois un diamètre (D) du trou de microphone (116a, 116b).

4. Machine de traitement du linge selon la revendication 1, 2, ou 3, dans laquelle l'ensemble de microphones (170) comprend en outre :
une carte de circuit imprimé (178) pour convertir un signal audio reçu par l'ensemble de microphones (170) en un signal électrique,
dans laquelle la carte de circuit imprimé (178) est en contact étroit avec la surface avant interne de la porte (100) sur un côté, et dans laquelle les microphones sont disposés sur l'autre côté de la carte de circuit imprimé (178).

5. Machine de traitement du linge selon la revendication 4, dans laquelle la carte de circuit imprimé (178) présente un trou de communication (179a, 179b) pour faire communiquer le trou de microphone (116a, 116b) formé du côté avant avec le microphone (180a, 180b) disposé du côté arrière.

6. Machine de traitement du linge selon la revendication 4, ou 5, dans laquelle l'ensemble de microphones (170) comprend :
un élément adhésif (176) pour faire adhérer la carte de circuit imprimé (178) à la surface avant interne de la porte (100) ; et
un élément hydrofuge (174) pour empêcher l'humidité externe de s'écouler dans la carte de circuit imprimé (178), dans laquelle l'élément adhésif (176) est disposé des deux côtés de l'élément hydrofuge (174),
et l'élément adhésif (176) présente un trou formé dans une partie où le trou de communication (179a, 179b) de la carte de circuit imprimé (178) est formé, dans laquelle le trou présente la même taille que le trou de communication (179a, 179b).

7. Machine de traitement du linge selon l'une quelconque des revendications 1 à 6, dans laquelle la porte (100) comprend :
un cadre de porte (120) qui définit une structure interne de la porte ;
un capot avant (110) disposé sur le côté avant (F) du cadre de porte (120), le capot avant (110) étant formé en une surface incurvée convexe par rapport au côté avant, et présentant une surface plane sur laquelle l'ensemble de microphones (170) est monté ;
un hublot de porte (142) disposé sur un côté arrière du capot avant (110) et scellant l'orifice d'introduction (22) ; et
un capot arrière (130) disposé sur un côté arrière (R) du cadre de porte (120) et recouvrant le côté arrière de la porte (100),
dans laquelle le capot avant (110) présente une rainure qui forme une surface de support plane dans une partie où l'ensemble de microphones (170) est monté.

8. Machine de traitement du linge selon la revendication 7, comprenant en outre un haut-parleur (190) disposé entre le capot avant (110) et le capot arrière (130) pour émettre du son,
dans laquelle le capot arrière (130) présente une rainure de haut-parleur (134) formant une rainure convexe par rapport à un côté arrière de manière à former un espace pour recueillir le son généré par le haut-parleur (190) et un trou de haut-parleur (136) formé sur un côté inférieur de la rainure de haut-parleur (134) de manière à communiquer avec l'extérieur.

9. Machine de traitement du linge selon la revendication 8, comprenant en outre un élément de montage de haut-parleur (150) disposé du côté avant du capot arrière (130) et sur lequel le haut-parleur (190) est monté,
dans laquelle le haut-parleur (190) est disposé dans l'élément de montage de haut-parleur (150) de manière à faire face au capot arrière (130).

10. Machine de traitement du linge selon la revendication 9, comprenant en outre une nervure verticale (152) et une nervure horizontale (154) faisant saillie vers un côté arrière depuis une surface arrière de l'élément de montage de haut-parleur (150),
dans laquelle la nervure verticale (152) et la nervure horizontale (154) sont disposées en une forme de grille sur une surface arrière de l'élément de montage de haut-parleur (150),
dans laquelle la nervure verticale (152) et la nervure horizontale (154) font saillie vers un côté arrière depuis une partie excluant une partie où le haut-parleur (190) est monté.

11. Machine de traitement du linge selon la revendication 10, comprenant en outre une nervure (158) de prévention d'assemblage erroné faisant saillie côté arrière de l'élément de montage de haut-parleur (150) en contact avec un côté inférieur du haut-parleur (190), dans laquelle le côté inférieur du haut-parleur (190) est séparé d'un côté supérieur du haut-parleur (190).

12. Machine de traitement du linge selon la revendication 9, dans laquelle le capot arrière (130) comporte une nervure en saillie (138, 139) faisant saillie depuis une circonférence externe de la rainure de haut-parleur (134) vers l'intérieur de la porte (100).

13. Machine de traitement du linge selon la revendication 12, dans laquelle la nervure en saillie (138, 139) comprend :
une première nervure en saillie (138) formée dans une circonférence externe d'un côté supérieur et des côtés gauche et droit de la rainure de haut-parleur (134) ; et
une seconde nervure en saillie (139) formée sur un côté inférieur de la rainure de haut-parleur (134),
dans laquelle le haut-parleur (190) est disposé pour être incliné vers la seconde nervure en saillie (139), et la seconde nervure en saillie (139) est plus longue que la première nervure en saillie (138).

14. Machine de traitement du linge selon l'une quelconque des revendications 8 à 13, comprenant en outre un élément hydrofuge de haut-parleur pour empêcher l'humidité de s'écouler à l'intérieur du haut-parleur (190).

15. Machine de traitement du linge comprenant :
une carrosserie (20) qui définit un extérieur de la machine de traitement du linge, la carrosserie (20) ayant un orifice d'introduction (22) à travers lequel le linge est introduit ;
une cuve disposée à l'intérieur de la carrosserie (20) et qui définit un espace configuré pour stocker l'eau de lavage ;
un tambour (40) disposé de manière rotative à l'intérieur de la cuve ;
un haut-parleur (190) pour émettre un son correspondant à un état de fonctionnement de la machine de traitement du linge, à des informations de traitement, ou à un résultat de reconnaissance vocale ; et
une porte (100) configurée pour ouvrir et fermer l'orifice d'introduction (22), et formant un espace dans lequel le haut-parleur (190) est disposé,
**caractérisée en ce que**
une partie de rainure de haut-parleur (132) est formée sur une surface arrière interne de la porte (100) de manière à recueillir le son généré par le haut-parleur (190) et transmettre le son à l'extérieur,
dans laquelle la porte (100) comprend :
un cadre de porte (120) ; et
un capot avant (110) disposé du côté avant (F) du cadre de porte ; et
un capot arrière (130) disposé sur un côté arrière (R) du cadre de porte (120) et recouvrant le côté arrière de la porte (100),
dans laquelle le capot arrière (130) présente une rainure de haut-parleur (134) formant une rainure convexe par rapport à un côté arrière de manière à former un espace pour recueillir le son généré par le haut-parleur (190) et un trou de haut-parleur (136) formé sur un côté inférieur de la rainure de haut-parleur (134) de manière à communiquer avec l' extérieur.
